# EUROPEAN PATENT SPECIFICATION

(11) **EP 4 502 903 B1**
(45) Date of publication and mention of the grant of the patent: **24.12.2025**
(21) Application number: 23020362.2
(22) Date of filing: 01.08.2023
(51) Int. Cl.: G06Q 20/22

(54) **SERVICE SYSTEM AND PAYMENT DATA STRUCTURE**
DIENSTSYSTEM UND ZAHLUNGSDATENSTRUKTUR
SYSTÈME DE SERVICE ET STRUCTURE DE DONNÉES DE PAIEMENT

(43) Date of publication of application: 05.02.2025
(73) Proprietor: Giesecke+Devrient advance52 GmbH, 81677 München (DE)
(72) Inventor: Bohn, Markus, 81677 München (DE)
(74) Representative: Giesecke+Devrient IP

(56) References cited:
- EP-A1- 3 671 602
- WO-A1-2006/005838
- WO-A1-2022/204041
- WO-A1-98/44429
- US-A1- 2008 260 152
- US-A1- 2013 174 244
- US-A1- 2021 342 909
- VIJAY VARADHARAJAN ET AL: "AN ANALYSIS OF THE PROXY PROBLEM IN DISTRIBUTED SYSTEMS", PROCEEDINGS OF THE SYMPOSIUM ON RESEARCH IN SECURITY AND PRIVACY. OAKLAND, MAY 20 - 22, 1991; [PROCEEDINGS OF THE SYMPOSIUM ON RESEARCH IN SECURITY AND PRIVACY], LOS ALAMITOS, IEEE COMP. SOC. PRESS, US, vol. SYMP. 12, 20 May 1991 (1991-05-20), pages 255 - 275, XP000220799, ISBN: 978-0-8186-2168-0

## Description

The invention relates to a service system. The invention also relates to a method for payment of services provided. The invention further relates to a remote payment data structure unit.

It is well-known to provide a local payment terminal at each service unit, such that a payment can be performed locally after a service has been provided or before a service is provided by the service unit.

Another common approach is to provide a central billing system, which allows the service units to request a payment from the account of the service customer to the account of the service unit.

WO 98/44429 A1 describes a smart card payment system using stored value in the form of serialized electronic coins and electronic bills. WO 2006/005838 A1 relates to a remote payment method in which a payment terminal uses a series of tokens, wherein knowledge of a given token only allows knowledge of the preceding tokens. A bundle of paid health services are represented as a digital service asset token in US 2021342909 A1. The article "An analysis of the proxy problem in distributed systems" by V. Varadharajan et al. (XP000220799) looks at the problem of delegation of rights in distributed object systems. WO 2022/204041 A1 uses a NFT token in a blockchain as a proof of purchase. A sub-token may be created for authentication of a user device based on a master token of the user device according to US 2013174244 A1. US 2008260152 A1 provides a method of authenticating a plurality of physical tokens attached to a sequence of interconnected devices.

In EP 3 671 602 A1 a new electronic coin data set is created from a received electronic coin data set, wherein the received electronic coin data set comprises multiple elements. The elements being derived by means of a one-way function (hash or elliptic curve) from a position of the element and a random number neither known nor derivable for the system participants. The new electronic coin data set comprises the unamended element(s) of the received electronic coin data set and the(ir) position in the received electronic coin data set.

In WO 2019/117843 A1 an item delivery system comprises a wireless data transmission device and a delivery vehicle, wherein the delivery vehicle releases the item after the payment has been performed. The wireless data transmission device provides payment information to the delivery vehicle, which is forwarded to an account-based payment network performing the transaction. The payment information may include a release token, which is pre-stored in the wireless data transmission device for releasing a payment from the account represented by the release token.

In cases where services from different service units are provided for an object, the respective services are provided and the respective payments may be conducted independent from each other. Hence, a first and a second service unit may for example use different payment methods and/or different data transmission means.

Accordingly, it is an object to provide a service payment solution, which can be flexibly used, e.g. by different service units providing different services for the object and/or for different objects for which services are to be provided. The solution preferably enables a good level of security for the payment.

The object is solved by the subject matter of the independent claims. Dependent claims are directed to preferred embodiments.

In an aspect of the present solution a method for payment of services provided comprises the following steps:
- a first service provider unit providing a first service for a physical object;
- conducting a payment for the first service provided;
- a second service provider unit providing a second service for the serviced object for which the first service was provided; and
- conducting a payment for the second service provided.

A common payment data structure is provided, the common payment data structure comprising at least a first encrypted payment token and a second encrypted payment token. The common payment data structure is provided for a predefined chain of service steps. In the step of conducting the payment for the first service the first encrypted payment token is decrypted into a first payment token. In the step of conducting the payment for the second service the second encrypted payment token is decrypted into a second payment token. First and second decryption keys are used in the first and second decryption steps respectively. The second service provider unit provides a decryption key for the step of decrypting the first encrypted payment token.

The common payment data structure provided thus already includes the payment tokens for paying the service units for the services provided. Preferably, the first/ second service units receive the first/ second payment token. Thereby for example a situation can be avoided, in which a customer account - e.g. temporarily - is unable to perform a payment.

The payment data structure comprises at least two encrypted payment tokens for at least two services provided for the object. Basically, multiple (m) services may be provided, wherein the payment data structure comprises a corresponding number (m) of encrypted payment tokens. Each of the encrypted payment tokens is decrypted into a respective payment token. Hence, although in the following, at least partly only two (or more) services are mentioned, m services/tokens can be handled accordingly.

In preferred solutions first and second decryption keys are used in the steps of decrypting the first and second encrypted payment token. For decrypting an m-th encrypted token an m-th decryption key may be used. Due to using different first/ second ... decryption keys, multiple issues can be addressed.

At least in the first (and second) decryption step, optionally in (all) further decryption steps, two partial decryption keys are used: an external partial decryption key and an internal (or service unit) partial decryption key. Both first (second or further) partial decryption keys are required for the step of decrypting into the first (second or further) payment token. Preferably, the two partial decryption keys are either used in two decryption sub-steps of the respective decryption step or the two partial decryption keys are combined to form the decryption key of the respective decryption step.

Advantageously, the step of decrypting the first encrypted payment token comprises a first (sub-)step of pre-decrypting the second encrypted payment token and/or at least one further encrypted payment token. The further encrypted payment token is provided for (conducting a payment to) a further service provide unit. Thus, it can for example be achieved that the second and/or further payment token for the second/further service provider unit can only be received (and/or decrypted) after the payment for the first service provider unit, including the first out of two sub-steps of decryption, has been performed. In preferred variants an external partial key is used for the step of decrypting.

The common payment data structure provided may comprise the second encrypted payment token and/or (m-1) further encrypted payment tokens, including the second token and further tokens, in a multi-encrypted form. Preferably, the m-th payment token is m-times encrypted. Alternatively, the second and the further tokens are double-encrypted (a third and further tokens may be triple-encrypted). In further alternatives, a pre-defined selection of the encrypted payment tokens in the common payment data structure is multi-encrypted (double/triple). For example, the third and fourth may be double-encrypted using the first decryption key.

The second encrypted payment token may be provided in a double-encrypted form requiring two decryption steps and/or two decryption keys. The m-th encrypted payment token may be provided in a m-times-encrypted form, requiring m decryption steps and/or m decryption keys. For example, in some alternatives decryption keys are combined before performing a decryption step using the combined key.

After the step of conducting the payment for the first service the common payment data structure thus preferably comprises the second pre-decrypted encrypted payment token and/or at least one further pre-decrypted encrypted payment token.

As indicated already, the common payment data structure is provided for a predefined chain of service steps. At least two of the following being pre-defined: the service, the service providing unit and/or the monetary service value (the monetary value paid for the service). Typically, the owner of the object will pre-define the chain of services. An owner unit may provide the initial the common payment data structure for the object.

The common payment data structure is preferably provided to a remote common payment data structure unit, but may in variants be provided to the object.

An object status of the object changes when a service was provided. The second (or further) service provider unit may check the object status of the object. The second (or further) service provider unit thus may check if the first (or required previous) service was performed and optionally if it was performed correctly.

Initially, a decryption key (or alternatively a status confirmation code) for a first (or further) encrypted payment token could be distributed to the second (respectively subsequent) service unit. The second service provider unit may provide a decryption key for the step of decrypting the encrypted first payment token. It could provide the decryption key to the first service provider unit or to the remote payment data structure unit. Preferably the decryption key is provided, if the check of the object status was successful only. Accordingly, each further (n-th) decryption key may be (initially distributed to and later) provided by a subsequent (n+1-th) service provider unit.

In the step of conducting the payment for the first/second/further service a request may be sent to a remote payment data structure unit. The request may for example comprise the respective decryption key and/or a status confirmation code (e.g. a one-time-password). Preferably, in response to the request either a first/second/further payment token (after decryption in the remote payment data structure unit) or the encrypted first/second/further payment token is received (decryption in the service provider unit). The remote payment data structure unit stores at least the common payment data structure for the object and typically multiple common payment data structures for respective multiple objects.

The object may comprise an access information for the common payment data structure of the object, particularly comprising an address of a remote common payment data structure of the object and/or secret access data for the remote common payment data structure of the object.

The token may be a digital currency payment token. The payment token may be a central bank issued token, such as a CBDC token (central bank digital currency token). In the preferred mode, the payment tokens are payment tokens of a token-based payment system (i.e. not account-based). In particular the payment tokens may be directly exchanged between participants of the payment system and/or can - after being received by the service provider unit - be send to other participants of the payment system in a payment. The payment token thus preferably is directly exchangeable and/or respendable. The token may be a digital currency token from other commercial issuers. For details of different embodiments of the transaction system it could be referred to WO 2021/170644A1, WO 2020/212337A1, EP 3671514 A1 or WO 2023/036458 A1.

Alternative variants in which the object itself may comprise the common payment data structure will be discussed in more detail below.

The (first and second or further) service units may be IoT service provider units (or IoT devices). Hence, they include an internet or network communication interface, which can be e.g. used for the communication to the remote payment data structure unit. For providing the service, the service unit(s) may comprise and control an object sensor or at least one object related actuator.

The services provided for the object preferably are production services, transport services and/or destruction services. A production service may for example include subsequent transportation to the next service provider unit or be followed by a separate transportation service provided by a next service provider.

According to a further aspect there is a physical object for which a first and a second service is to be provided. The object comprises a common payment data structure or access information for a remote common payment data structure of the object. The common payment data structure comprising at least a first encrypted payment token and a second encrypted payment token. For conducting a payment to a respective first and second service provider providing a service, the first encrypted payment token has to be decrypted into a first payment token of a token-based payment system and the second encrypted payment token has to be decrypted into a second payment token of the token-based payment system.

The physical object and the common payment data structure can be configured to be used and/or used as described above.

The object may in embodiments comprise an electronic data storage storing the common payment data structure or the access information; and optionally further comprise a decryption unit for decrypting encrypted payment tokens into payment tokens and/or an interface unit (wireless or wired) to service provider units.

In preferred embodiments the access information comprises an address of the remote common payment data structure of the object and/or secret access data for the remote common payment data structure of the object. In addition or alternatively the access information for the common payment data structure of the object is provided in an optically readable form on the object.

According to another aspect there is a remote payment data structure unit. It comprises a payment data structure for an object for which services from a first and a second service provider is to be provided. The payment data structure comprises an encrypted first payment token and an encrypted second payment token. They are decryptable into a respective first and second payment token. The unit further comprises a data structure management unit configured for
decrypting the encrypted first/ second payment token; and/or
providing the first/ second payment token to first/ second service providers; and/or;
providing the encrypted first/ second payment to first/ second service providers.

The remote payment data structure unit typically stores common payment data structures for multiple objects, particularly of multiple object owners.

A service system may be adapted as described above and particularly may comprise at least one or multiple physical objects as described above, and/or one or more remote payment data structure units, as described above, for storing the payment data structures of the at least one or multiple physical objects.

In the following, the invention or further embodiments and advantages of the invention are explained in more detail based on drawings, wherein the drawings describe only embodiments of the invention. Identical components in the drawings are given the same reference signs. At least elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a service system and a method according to the invention.
Fig. 2a-2e show a common payment data structure comprising four encrypted payment tokens, partly in different variants of multi-step encryption.
Fig. 3a and 3b show objects for a service system according to embodiments of the invention.

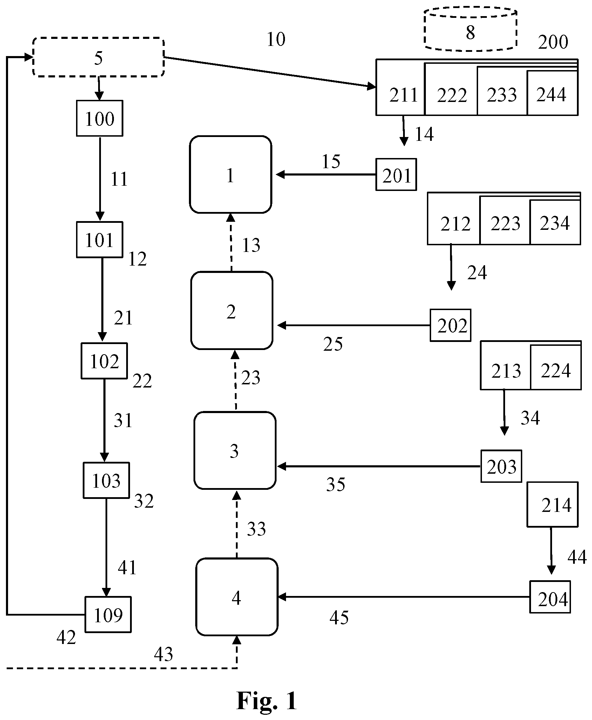

Fig. 1 illustrates a service system comprising an object 100, service provider units 1, 2, 3 and 4 as well as a common payment data structure 200. In addition an object owner unit 5 and/or a remote payment data structure unit 8 may exist.

The object 100 is a physical object. Transport and/ or production services 11, 21, 31, 41 are provided for the object 100. The services 11 to 41 to be provided for the object 100 have been pre-defined by the customer/ object owner, even the service provider units may be pre-defined.

For example, the object has to be transported in 4 separate transport steps. The object shall be transported e.g. from A to B via car, from B to C, from C to D via aircraft or ship and from D to a final destination E. The object 100 thus changing its position as an object status from 101 to 104. In another example the object shall be processed in production steps, e.g. from wood 100 to cut wood 101 (wood cutting service 11), further from cut wood to wood product parts 102 (part production service 12), from wood product parts 102 to an assembled wood product 103 (product assembly service 13) and finally from the assembled wood product 103 to a final colored wood product (coloring service 14). Of course, any object type, any service type and number of services may be involved. Furthermore, a production service provider may in addition provide transport services, e.g. from the previous service provider or to the next service provider.

The common payment data structure 200 is provided in an initial step 10 or preparation phase. It includes - e.g. four - encrypted payment tokens 211, 222, 233, 244. The encrypted payment tokens 211, 222, 233, 244 can be decrypted into a (decrypted) payment tokens 201, 202, 203, 204, which can be used in a payment transaction system. The common payment data structure 200 is individually provided for the object (one structure per object). Hence, it is an object-individual common payment data structure 200 of the object.

In step 11, the first step of a service phase, the first service is provided to the object 100 by service provider unit 1. The first encrypted payment token 211 is decrypted 14 into the first payment token 201. A first decryption key is used for the step of decrypting 14. In the step of decrypting 14, also the second, third and fourth encrypted payment tokens 222, 233, 244 are pre-decrypted into second, third and fourth encrypted payment tokens 212, 223, 234. The first payment token 201 is received 15 by the first service provider (as a payment for the first service provided for the object 100).

In step 21, a step of a service phase, the second service is provided to the object 101 by service provider unit 2. The second encrypted payment token 212 is decrypted 24 into the second payment token 202. A second decryption key is used for the step of decrypting 24. In the step of decrypting 24, also the third and fourth encrypted payment tokens 223, 234 are pre-decrypted into third and fourth encrypted payment tokens 213, 224. The second payment token 202 is received 25 by the second service provider (as a payment for the second service provided for the object 101).

In the embodiment illustrated in Fig. 1 the m-th token of the common payment data structure 200 is m-times-encrypted. The second digit of the reference sign of the payment token is used to indicate this encryption level. Hence, the first encrypted payment token 211 can be directly decrypted 14 into the (unencrypted) first payment token 201. The second encrypted payment token 222 is double-encrypted. Thus it can be pre-decrypted 14 into second encrypted payment token 212. Second encrypted payment token 212 can be subsequently be decrypted 24 into the (unencrypted) second payment token 202. The third encrypted payment token 233 is triple-encrypted. Thus it can be pre-decrypted 14 into third encrypted payment token 223. Second encrypted payment token 223 can be subsequently be further pre-decrypted 24 into the still encrypted third payment token 213. The third encrypted payment token 213 can be subsequently decrypted 34 into the (unencrypted) third payment token 203. The fourth encrypted payment token 244 is four-times-encrypted. The fourth (unencrypted) payment token 204 is generated by pre-decryption in steps 14, 24 and 34 and finally in decryption step 44.

The encryption in the common payment data structure 200 can be used in order to control the order of services 11-41 in the chain of services. In Fig. 1 the encryption indirectly enforces a linear order of the services 11-41.

The first payment token 201 may be received 15 by the first service provider, e.g. from the remote payment data structure unit 8 or from the object 101 for which the first service was provided. It could be received in the first service provider unit 1 or in a payment token management unit (or token wallet) of the first service provider.

The second payment token 202 may be received 25 by the first service provider, e.g. from the remote payment data structure unit 8 or from the object 102 for which the second service was provided. It could be received in the second provider unit 2 or in a payment token management unit (or token wallet) of the second service provider. The same applies for receipt 35, 45 of the third and fourth payment token 203, 204 accordingly.

The object 101 for which the first service was provided may be transported to and/or checked 12 by the second service provider. The second service provider may provide 13 the first decryption key to the first service provider unit (or to the remote payment data structure unit 8). If the object 101 is in its first serviced object state, the second service provider would proceed, e.g. perform steps 13 and/or 21. If an object 100, 102 in another object state would be checked, the service provider would not proceed, e.g. not perform steps 13 and/or 21.

The object 102 for which the second service was provided may be transported to and/or checked 22 by the third service provider. The third service provider may provide 23 the second decryption key to the second service provider unit (or to the remote payment data structure unit 8). If the object 102 is in its second serviced object state, the third service provider would proceed, e.g. perform steps 23 and/or 31. If an object 100, 101 in another object state would be checked, the service provider would not proceed, e.g. not perform steps 23 and/or 31. Again, basically the same applies for further steps of checking 32, 42 and/or further steps of providing 33, 43 a decryption key. As indicated in Fig. 1 the final steps of checking 42 and/or providing 43 may be performed by the object owner unit 5.

The common payment data structure 200 is preferably stored in the remote payment data structure unit 8. The remote payment data structure unit 8 may store multiple common payment data structures for respective multiple objects.

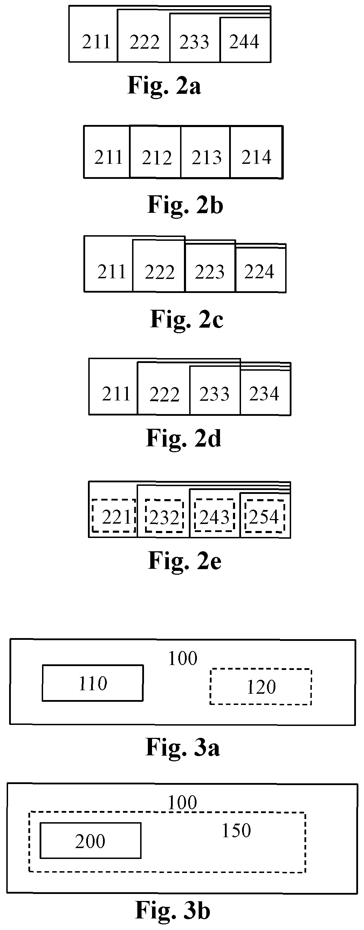

Within the preparation phase and/or in the step of providing 10, the decryption keys (and/or partial decryption keys) are also prepared. In a first variant decryption keys may be sent to the respective subsequent service provider unit in the chain of services. The first decryption key is sent to the second service provider unit, the second decryption key to the third service provider unit, ... (n-1-th key to n-th unit). In a second variant decryption keys are generated in a service provider unit. They may be sent to the remote payment data structure unit 8 or to the object owner unit 5. Preferably however, an encryption key is generated in the service provider unit and sent to the remote payment data structure unit 8 or to the object owner unit 5. The encryption key can be a public key of a public key pair, comprising the decryption key as a secret key. An n-1-th encryption key would be generated in the n-th service provider unit. In further variants using two partial decryption keys (cf. Fig.2e) the external partial decryption key would be provided as described above and in addition an internal decryption key of the service provider unit is prepared. Also the internal decryption key may be generated and/or sent as described above, particularly either generated in the service provider unit or sent to the service provider unit after generation in the object owner unit 5.

Payments in the payment transaction system are conducted by sending the payment token (token-based system). The payment transaction system may be a digital currency system, e.g. CBDC, accordingly the payment tokens are digital currency tokens, CBDC tokens.

The common payment data structure 200 for each service to be provided for the object comprises at least one payment token. In the preferred variants of payment transaction system, the monetary value of payment tokens can be selected as desired, e.g. by splitting a token or merging tokens (48,00 required => split 50 to 48 and 2). For example, the above cited patent applications disclose such digital currency tokens. In less preferred variants the payment transaction system comprises payment tokens of fixed denominations only (e.g. 0,1; 0,2; 0,5; 1; 2; 5; ...).

As it will be discussed in more detail below, with respect to Fig. 3B, the common payment data structure 200 alternatively may be provided with the object.

Fig. 2a to 2e illustrate different encryption approaches for a common payment data structure. In the examples each payment data structure comprise four encrypted payment tokens. As indicated above, the number of tokens may be m (e.g. 2<= m < 100) for m services to be provided for the object. Separate/ different decryption keys and/or separate/ different partial decryption keys are used for each token, e.g. m (four) decryption keys and/or 2*m (eight) partial decryption keys.

Fig. 2a shows the common payment data structure of Fig. 1, comprising the encrypted payment tokens 211, 222, 233 and 244, wherein the m-th token is m-times encrypted.

Fig. 2b shows a common payment data structure, comprising the encrypted payment tokens 211, 212, 213 and 214, wherein each token is encrypted once (can be directly decrypted).

Fig. 2c shows a common payment data structure, comprising the encrypted payment tokens 211, 222, 223 and 224, wherein the second and following tokens are double-encrypted. Besides the first token 211, which can be directly decrypted, one pre-decryption step is required for each token 212-214. Typically, in the step of decrypting the (n-th) token the pre-decryption step for the subsequent (n+1-th) token is performed (using the n-th decryption key).

Fig. 2d shows a common payment data structure, comprising the encrypted payment tokens 211, 222, 233 and 234, wherein the third, firth (and following) tokens are triple-encrypted. Again the first token 211, which can be directly decrypted and the second token 222 required one pre-decryption step. Now two pre-decryption steps are required for each token 213-214. Typically, in the step of decrypting the (n-th) token the pre-decryption step for two subsequent (n+1-th and n+2-th) tokens is performed (using the n-th decryption key).

It should be noted that other encryption combinations, not shown, could be used. For example, a common payment data structure, comprising the encrypted payment tokens 211, 212, 223, 224 (first pre-decrypts third, second pre-decrypts fourth) or 211, 222, 213, 224 (first pre-decrypts second, third pre-decrypts fourth). A corresponding order of the steps is indirectly enforced, however selectively for only pre-defined steps.

Fig. 2e illustrates how partial decryption keys could be used. Partial decryption keys may particularly prevent decryption of an encrypted payment token by a subsequent service provider unit, which provides a decryption key for decryption. The partial decryption keys are applied in Fig. 2e to the example of Fig. 2a, they may however be used in combination with any of the above encryption approaches.

Fig. 2e shows a common payment data structure, comprising the encrypted payment tokens 221, 232, 243 and 254, wherein the m-th token is m+1-times encrypted. Each encrypted payment token 221, 232, 243 and 254 now is additionally encrypted by a service unit (internal) partial decryption key. The additional encryption is indicated by dotted lines in Fig. 2e. An external partial decryption key is preferably provided by the subsequent service provider unit. In the example of Fig. 2e the external partial decryption key is used for a first decryption sub-step (and optionally the pre-decryption step) and the service unit partial key is used for a second decryption sub-step.

Hence, the first service provider unit has his first service provider unit (or internal) partial decryption key. A first external partial decryption key is provided by the second service provider unit for a first sub-step of the first decryption step of first encrypted payment token 221. The first external partial decryption key is also used for the pre-decryption of the further encrypted payment tokens 232, 243 and 254. In a second sub-step of the first decryption step of the first encrypted payment token 221 the internal partial decryption key of the service provider unit is used. After both sub-steps of the first decryption step are performed the first payment token 201 is present. Generally the same applies for the second (and further) encrypted payment token 232 (243, 254) and the second (and further) service provider unit. The m-th service provider unit has an internal m-th partial decryption key for the m-th decryption step and an external m-th partial decryption key is provided for the m-th decryption step (m=1,2,...). Both partial decryption keys are required for the step of decrypting the encrypted payment token 221-224 into the payment token 201-204.

In the example of Fig. 2e the partial decryption keys are used in two sub-steps of the decrypting. In alternatives to this approach the two partial keys may be combined to form the decryption key and thereafter the combined key is used in the (one) decryption step. Accordingly, the external m-th partial decryption key and the internal m-th partial decryption key are combined to form the m-th decryption key for the m-th decryption (m=1,2, ...).

As indicated in Fig. 3a the object 100 may comprise access information 110, 120 for the common payment data structure 200 stored in a remote payment data structure unit 8. The access information 110, 120 preferably is provided in a optically readable form, e.g. barcode (such as 2D, 3D or QR code) and/or printed data.

A first access information 110 may comprise or consist of an address common payment data structure 200. The first, access information 110 possibly including a communication address, e.g. URL, of the remote payment data structure unit 8 and/or an identifier of the common payment data structure 200 of the object. A second access information 120 may be secret access data for the remote common payment data structure of the object. The secret access data, like a password or access key, has to be presented to the remote payment data structure unit 8, if a token is requested.

A service provider unit 1, 2, 3, 4 sends a request for his payment token 201, 202, 203 ,204 to the remote payment data structure unit 8. The request may include the address/identifier of the common payment data structure 200 of the object and/or the secret access data.

Fig. 3b illustrates an object 100 comprising the common payment data structure 200, e.g. of any of the previous Fig. 1 to 2e. In a first variant, the common payment data structure 200 is static. It may be provided in machine-readable, preferably optically, readable form and/or printed form. In a second variant, the common payment data structure 200 of the object 100 can be amended. It could be stored in data storage means 150, which allows read and write access, or in a rewritable barcode display. Storing and decrypting the common payment data structure 200 in a token management unit (or wallet) of the object 100, comprising the data storage means 150, would be possible. However, when a token management unit of the object exists, the pre-defined common payment data structure 200 may not be required anymore.

The common payment data structure 200 (in the object 100 or the remote payment data structure unit 8) may be static. The service provider may receive 15-45 the common payment data structure 200 or only the respective encrypted payment token 211-244 (from the object 100 or the remote payment data structure unit 8). The (m-th) service provider in addition to his (m-th) decryption key now may need and receive, preferably together with the object or from the remote payment data structure unit 8, the preceding decryption keys required for his token, e.g. one/two/three further decryption keys for his fourth encrypted payment token 224/234/244..

### REFERENCE SIGNS

- 1,2,3,4: service provider unit
- 5: object owner unit
- 8: remote payment data structure unit

- 10: provide payment data structure
- 11, 21, 31, 41: provide service to object
- 12, 22, 32, 42: check object status
- 13, 23, 33, 43: provide decryption key
- 14, 24, 34, 44: decrypt at least one encrypted payment token
- 15, 25, 35, 45: receive payment token

- 100: physical object
- 101-109: object state after service
- 110, 120: access information
- 150: data storage means

- 200: payment data structure
- 201, 202, 203, 204: payment token
- 211, 212, 213, 214: single-encrypted payment token
- 222, 223, 224: double-encrypted payment token
- 233, 234: triple-encrypted payment token
- 244: 4-times-encrypted payment token

## Claims

1. A method for payment of services provided, comprising:
- a first service provider unit (1) providing (11) a first service for a physical object (100);
- conducting a payment for the first service provided;
- a second service provider unit (2) providing (21) a second service for the serviced object for which the first service was provided;
- conducting a payment for the second service provided;
wherein a common payment data structure (200) is provided (10), **characterized in that** the common payment data structure (200) comprises at least a first encrypted payment token (211) and a second encrypted payment token (222);
the common payment data structure (200) is provided for a predefined chain of service steps (11-41) for the physical object;
in the step of conducting the payment for the first service the first encrypted payment token (211) is decrypted (14) into a first payment token (201);
in the step of conducting the payment for the second service the second encrypted payment token (212) is decrypted (24) into a second payment token (202);
first and second decryption keys are used in the first and second decryption steps (14,24) respectively; and **in that**
the second service provider unit (2) provides (13) the first decryption key for the step of decrypting (14) the first encrypted payment token (211).

2. The method according to claim 1, wherein
in the step of decrypting (14) the first encrypted payment token, a step of pre-decrypting the second encrypted payment token and/or at least one further encrypted payment token, provided for a further service provider unit, is performed.

3. The method according to claim 1 or 2, wherein
at least in the first decryption step (14), two partial decryption keys are used, an external partial decryption key and a service unit partial decryption key,
wherein preferably the partial decryption keys are either combined to form the decryption key of the decryption step or used in two decryption sub-steps of the decryption step.

4. The method according to one of the preceding claims, wherein
the common payment data structure (200) provided comprises the second encrypted payment token (222) and/or a further encrypted payment token in a multi-encrypted form, wherein preferably the m-th encrypted payment token is m-times encrypted;
and/or
the common payment data structure (200) after the step of conducting the payment for the first service comprises the second pre-decrypted encrypted payment token and/or at least one further pre-decrypted encrypted payment token.

5. The method according to one of the preceding claims, wherein at least two of the following being pre-defined: the service, the service providing unit and the monetary service value.

6. The method according to one of the preceding claims, wherein
the second service provider unit (2) checks the object status (101) of the physical object (100).

7. The method according to one of the preceding claims, wherein
in the step of conducting the payment for the first/ second service a request is sent to a remote payment data structure unit (8) and wherein preferably
the first/ second payment token or the encrypted first/ second payment token is received (14) in response to the request.

8. The method according to one of the preceding claims, wherein
the physical object (100) comprises an access information comprising an address of a remote common payment data structure of the object and/or secret access data for the remote common payment data structure of the object.

9. The method according to one of the preceding claims, wherein
the services provided are production services, transport services or destruction services.

10. A physical object (100) for which a predefined chain of service steps (11-41), including a first and a second service, is to be provided, the object (100) comprising a common payment data structure (200) or access information (110) for a remote common payment data structure (200) of the object;
the common payment data structure (200) comprising at least a first encrypted payment token (211) and a second encrypted payment token (222);
wherein for conducting a payment to a respective first and second service provider providing a service, the first encrypted payment token (211) has to be decrypted into a first payment token (201) of a token-based payment system and the second encrypted payment token (222) has to be decrypted into a second payment token (202) of the token-based payment system;
wherein first and second decryption keys are used in the first and second decryption steps (14,24) respectively; and
wherein the second service provider unit (2) provides (13) the first decryption key for the step of decrypting (14) the first encrypted payment token (211).

11. The object (100) according to claim 10, comprising an electronic data storage storing the common payment data structure (200) or the access information (110); and
optionally comprising a decryption unit for decrypting encrypted payment tokens into payment tokens.

12. The object (100) according to claim 10 or 11,
the access information (110) comprising an address of the remote common payment data structure (200) of the object (100) and/or secret access data for the remote common payment data structure (200) of the object (100); and/or
the access information (110) for the common payment data structure (200) of the object (100) is provided in an optically readable form on the object.

13. The object (100) according to one of claims 10 to 12, wherein
a predefined chain of services, comprising at least the first and second services, is to be provided to the object; and/or
the first and second services are production services, transport services or destruction services.

14. A remote payment data structure unit (8), wherein the remote unit comprises
a payment data structure (200) for a physical object for which a predefined chain of services, including first and second services from a first and a second service provider, is to be provided, the payment data structure (200) comprising an encrypted first payment token (211) and an encrypted second payment token (222), wherein first and second decryption keys are required for respectively decrypting the first/second encrypted payment token (211, 222) into a first/ second payment token (201, 202); and
a data structure management unit configured for providing the first/ second payment token (201, 202) or the encrypted first/second payment token (211, 222) to first/ second service providers (1, 2) and/or for decrypting the encrypted first/ second payment token (211,222), wherein the second service provider unit (2) provides (13) the first decryption key for the step of decrypting (14) the first encrypted payment token (211).

15. A service system configured for performing a method according to one of claims 1 to 9, the system preferably comprising
at least the first service provider unit (1) and the second service provider unit (2); at least one or multiple physical objects (100) according to one of claims 10 to 13; and/or
a remote payment data structure unit (8) according to claim 14, storing the payment data structures (200) of the at least one or multiple physical objects (100).

## Patentansprüche

1. Verfahren zur Bezahlung bereitgestellter Dienstleistungen, umfassend:
- eine erste Dienstanbieter-Einheit (1), die eine erste Dienstleistung für ein physisches Objekt (100) bereitstellt (11);
- die Durchführung einer Bezahlung für die bereitgestellte erste Dienstleistung;
- eine zweite Dienstanbieter-Einheit (2), die eine zweite Dienstleistung (21) für das bediente Objekt bereitstellt, für das die erste Dienstleistung bereitgestellt wurde;
- die Durchführung einer Bezahlung für die bereitgestellte zweite Dienstleistung;
wobei
eine gemeinsame Zahlungsdatenstruktur (200) bereitgestellt wird (10), **dadurch gekennzeichnet, dass** die gemeinsame Zahlungsdatenstruktur (200) zumindest ein erstes verschlüsseltes Zahlungs-Token (211) und ein zweites verschlüsseltes Zahlungs-Token (222) umfasst;
die gemeinsame Zahlungsdatenstruktur (200) für eine vordefinierte Kette von Dienstschritten (11-41) für das physische Objekt bereitgestellt wird;
in dem Schritt der Durchführung der Bezahlung für die erste Dienstleistung das erste verschlüsselte Zahlungs-Token (211) in ein erstes Zahlungs-Token (201) entschlüsselt wird (14);
in dem Schritt der Durchführung der Bezahlung für die zweite Dienstleistung das zweite verschlüsselte Zahlungs-Token (212) in ein zweites Zahlungs-Token (202) entschlüsselt wird (24);
der erste und der zweite Entschlüsselungsschlüssel in dem jeweils ersten oder zweiten Entschlüsselungsschritt (14, 24) verwendet werden; und dadurch, dass
die zweite Dienstanbieter-Einheit (2) den ersten Entschlüsselungsschlüssel für den Schritt der Entschlüsselung (14) des ersten verschlüsselten Zahlungs-Tokens (211) bereitstellt (13).

2. Verfahren nach Anspruch 1, wobei
in dem Schritt der Entschlüsselung (14) des ersten verschlüsselten Zahlungs-Tokens ein Schritt der Vorentschlüsselung des zweiten verschlüsselten Zahlungs-Tokens und/oder mindestens eines weiteren verschlüsselten Zahlungs-Tokens, das für eine weitere Dienstanbieter-Einheit vorgesehen ist, durchgeführt wird.

3. Verfahren nach Anspruch 1 oder 2, wobei
zumindest in dem ersten Entschlüsselungsschritt (14) zwei Teil-Entschlüsselungsschlüssel verwendet werden, nämlich ein externer Teil-Entschlüsselungsschlüssel und ein Teil-Entschlüsselungsschlüssel der Dienstanbieter-Einheit, wobei vorzugsweise die Teil-Entschlüsselungsschlüssel entweder kombiniert werden, um den Entschlüsselungsschlüssel des Entschlüsselungsschritts zu bilden, oder in zwei Entschlüsselungs-Teilschritten des Entschlüsselungsschritts verwendet werden.

4. Verfahren nach einem der vorhergehenden Ansprüche, wobei
die bereitgestellte gemeinsame Zahlungsdatenstruktur (200) das zweite verschlüsselte Zahlungs-Token (222) und/oder ein weiteres verschlüsseltes Zahlungs-Token in einer mehrfach verschlüsselten Form umfasst, wobei vorzugsweise das m-te verschlüsselte Zahlungs-Token m-mal verschlüsselt ist; und/oder
die gemeinsame Zahlungsdatenstruktur (200) nach dem Schritt der Durchführung der Bezahlung für die erste Dienstleistung das zweite vorentschlüsselte verschlüsselte Zahlungs-Token und/oder mindestens ein weiteres vorentschlüsseltes verschlüsseltes Zahlungs-Token umfasst.

5. Verfahren nach einem der vorhergehenden Ansprüche, wobei mindestens zwei der Folgenden vordefiniert sind: die Dienstleistung, die Dienstanbieter-Einheit und der monetäre Dienstleistungswert.

6. Verfahren nach einem der vorhergehenden Ansprüche, wobei
die zweite Dienstanbieter-Einheit (2) den Objektstatus (101) des physischen Objekts (100) überprüft.

7. Verfahren nach einem der vorhergehenden Ansprüche, wobei
in dem Schritt der Durchführung der Bezahlung für die erste/zweite Dienstleistung eine Anforderung an eine entfernte Zahlungsdatenstruktureinheit (8) gesendet wird, und wobei vorzugsweise
das erste/zweite Zahlungs-Token oder das verschlüsselte erste/ zweite Zahlungs-Token (14) als Reaktion auf die Anforderung empfangen wird.

8. Verfahren nach einem der vorhergehenden Ansprüche, wobei
das physische Objekt (100) eine Zugriffsinformation umfasst, die eine Adresse einer entfernten gemeinsamen Zahlungsdatenstruktur des Objekts und/oder geheime Zugriffsdaten für die entfernte gemeinsame Zahlungsdatenstruktur des Objekts umfasst.

9. Verfahren nach einem der vorhergehenden Ansprüche, wobei
die bereitgestellten Dienstleistungen Produktionsdienstleistungen, Transportdienstleistungen oder Vernichtungsdienstleistungen sind.

10. Physisches Objekt (100), für das eine vordefinierte Kette von Dienstschritten (11-41), einschließlich einer ersten und einer zweiten Dienstleistung, bereitgestellt werden soll, wobei das Objekt (100) eine gemeinsame Zahlungsdatenstruktur (200) oder Zugriffsinformationen (110) für eine entfernte gemeinsame Zahlungsdatenstruktur (200) des Objekts umfasst;
die gemeinsame Zahlungsdatenstruktur (200) zumindest ein erstes verschlüsseltes Zahlungs-Token (211) und ein zweites verschlüsseltes Zahlungs-Token (222) umfasst;
wobei zur Durchführung einer Bezahlung an jeweils einen ersten und einen zweiten Dienstanbieter, die eine Dienstleistung bereitstellen, das erste verschlüsselte Zahlungs-Token (211) in ein erstes Zahlungs-Token (201) eines Token-basierten Zahlungssystems entschlüsselt werden muss und das zweite verschlüsselte Zahlungs-Token (222) in ein zweites Zahlungs-Token (202) des Token-basierten Zahlungssystems entschlüsselt werden muss;
wobei der erste und zweite Entschlüsselungsschlüssel in dem jeweils ersten oder zweiten Entschlüsselungsschritt (14, 24) verwendet wird; und
wobei die zweite Dienstanbieter-Einheit (2) den ersten Entschlüsselungsschlüssel für den Schritt der Entschlüsselung (14) des ersten verschlüsselten Zahlungs-Tokens (211) bereitstellt (13).

11. Objekt (100) nach Anspruch 10, umfassend einen elektronischen Datenspeicher, der die gemeinsame Zahlungsdatenstruktur (200) oder die Zugriffsinformationen (110) speichert, und optional umfassend eine Entschlüsselungseinheit zum Entschlüsseln verschlüsselter Zahlungs-Token in Zahlungs-Token.

12. Objekt (100) nach Anspruch 10 oder 11,
wobei die Zugriffsinformationen (110) eine Adresse der entfernten gemeinsamen Zahlungsdatenstruktur (200) des Objekts (100) und/oder geheime Zugriffsdaten für die entfernte gemeinsame Zahlungsdatenstruktur (200) des Objekts (100) umfassen; und/oder
die Zugriffsinformationen (110) für die gemeinsame Zahlungsdatenstruktur (200) des Objekts (100) in optisch lesbarer Form auf dem Objekt bereitgestellt sind.

13. Objekt (100) nach einem der Ansprüche 10 bis 12, wobei
eine vordefinierte Kette von Dienstleistungen, die zumindest die erste und die zweite Dienstleistung umfasst, für das Objekt bereitgestellt werden soll; und/oder
die erste und zweite Dienstleistung Produktionsdienstleistungen, Transportdienstleistungen oder Vernichtungsdienstleistungen sind.

14. Entfernte Zahlungsdatenstruktureinheit (8), wobei die entfernte Einheit umfasst:
eine Zahlungsdatenstruktur (200) für ein physisches Objekt, für das eine vordefinierte Kette von Dienstleistungen, einschließlich einer ersten und einer zweiten Dienstleistung durch einen ersten und einen zweiten Dienstanbieter, bereitgestellt werden soll, wobei die Zahlungsdatenstruktur (200) ein verschlüsseltes erstes Zahlungs-Token (211) und ein verschlüsseltes zweites Zahlungs-Token (222) umfasst, wobei für die Entschlüsselung des jeweiligen ersten/zweiten verschlüsselten Zahlungs-Tokens (211, 222) in ein erstes/zweites Zahlungs-Token (201, 202) ein erster und zweiter Entschlüsselungsschlüssel erforderlich sind; und
eine Datenstrukturverwaltungseinheit, die dazu konfiguriert ist, das erste/zweite Zahlungs-Token (201, 202) oder das verschlüsselte erste/zweite Zahlungs-Token (211, 222) der ersten/zweiten Dienstanbieter-Einheit (1, 2) bereitzustellen und/oder das verschlüsselte erste/zweite Zahlungs-Token (211, 222) zu entschlüsseln, wobei die zweite Dienstanbieter-Einheit (2) den ersten Entschlüsselungsschlüssel für den Schritt der Entschlüsselung (14) des ersten verschlüsselten Zahlungs-Tokens (211) bereitstellt (13).

15. Dienstsystem, das dazu konfiguriert ist, ein Verfahren nach einem der Ansprüche 1 bis 9 durchzuführen, das System vorzugsweise umfassend:
mindestens die erste Dienstanbieter-Einheit (1) und die zweite Dienstanbieter-Einheit (2);
mindestens ein oder mehrere physische Objekte (100) nach einem der Ansprüche 10 bis 13; und/oder
eine entfernte Zahlungsdatenstruktureinheit (8) nach Anspruch 14, die die Zahlungsdatenstrukturen (200) des mindestens einen oder mehreren physischen Objekte (100) speichert.

## Revendications

1. Procédé de paiement de services fournis, comprenant :
- une première unité de fournisseur de services (1) fournissant (11) un premier service pour un objet physique (100) ;
- le procédé comprenant d'effectuer un paiement pour le premier service fourni ;
- une deuxième unité de fournisseur de services (2) fournissant (21) un deuxième service pour l'objet concerné pour lequel le premier service a été fourni ;
- le procédé comprenant d'effectuer un paiement pour le deuxième service fourni ;
où
une structure de données de paiement commune (200) est pourvue (10), **caractérisée en ce que** la structure de données de paiement commune (200) comprend au moins un premier jeton de paiement crypté (211) et un deuxième jeton de paiement crypté (222) ;
la structure de données de paiement commune (200) est pourvue pour une chaîne prédéfinie d'étapes de service (11-41) pour l'objet physique ;
dans l'étape d'exécution du paiement pour le premier service, le premier jeton de paiement crypté (211) est décrypté (14) en un premier jeton de paiement (201) ;
dans l'étape d'exécution du paiement pour le deuxième service, le deuxième jeton de paiement crypté (212) est décrypté (24) en un deuxième jeton de paiement (202) ;
des première et deuxième clés de décryptage sont utilisées dans les première et deuxième étapes de décryptage (14, 24) respectivement ; où
la deuxième unité de fournisseur de services (2) fournit (13) la première clé de décryptage pour l'étape de décryptage (14) du premier jeton de paiement crypté (211).

2. Procédé selon la revendication 1, dans lequel
dans l'étape de décryptage (14) du premier jeton de paiement crypté, une étape de pré-décryptage du deuxième jeton de paiement crypté et/ou d'au moins un autre jeton de paiement crypté, fourni à une autre unité de fournisseur de services, est effectuée.

3. Procédé selon la revendication 1 ou la revendication 2, dans lequel
au moins, dans la première étape de décryptage (14), deux clés de décryptage partiel sont utilisées, une clé de décryptage partiel externe et une clé de décryptage partiel d'unité de service, les clés de décryptage partiel étant de préférence combinées pour former la clé de décryptage de l'étape de décryptage ou utilisées dans deux sous-étapes de décryptage de l'étape de décryptage.

4. Procédé selon l'une des revendications précédentes, dans lequel
la structure de données de paiement commune (200) fournie comprend le deuxième jeton de paiement crypté (222) et/ou un autre jeton de paiement crypté sous une forme multicryptée, où, de préférence, le m^{ème} jeton de paiement crypté est crypté m fois ; et/ou
la structure de données de paiement commune (200), après l'étape de réalisation du paiement pour le premier service, comprend le deuxième jeton de paiement crypté prédécrypté et/ou au moins un autre jeton de paiement crypté prédécrypté.

5. Procédé selon l'une des revendications précédentes, dans lequel au moins deux des éléments suivants sont prédéfinis : le service, l'unité de fourniture de service et la valeur de service monétaire.

6. Procédé selon l'une des revendications précédentes, dans lequel
la deuxième unité de fournisseur de services (2) vérifie l'état de l'objet (101) de l'objet physique (100).

7. Procédé selon l'une des revendications précédentes, dans lequel
dans l'étape comprenant d'effectuer le paiement pour le premier/deuxième service, une demande est envoyée à une unité de structure de données de paiement distante (8) et où, de préférence,
le premier/deuxième jeton de paiement ou le premier/deuxième jeton de paiement crypté est reçu (14) en réponse à la demande.

8. Procédé selon l'une des revendications précédentes, dans lequel
l'objet physique (100) comprend des informations d'accès comprenant une adresse d'une structure de données de paiement commune distante de l'objet et/ou des données d'accès secrètes pour la structure de données de paiement commune distante de l'objet.

9. Procédé selon l'une des revendications précédentes, dans lequel
les services fournis sont des services de production, des services de transport ou des services de destruction.

10. Objet physique (100) pour lequel une chaîne d'étapes de service prédéfinie (11-41), incluant un premier et un deuxième services, est à fournir, l'objet (100) comprenant une structure de données de paiement commune (200) ou des informations d'accès (110) pour une structure de données de paiement commune distante (200) de l'objet ;
la structure de données de paiement commune (200) comprenant au moins un premier jeton de paiement crypté (211) et un deuxième jeton de paiement crypté (222) ;
où, pour effectuer un paiement à des premier et deuxième fournisseurs de services respectifs fournissant un service, le premier jeton de paiement crypté (211) doit être décrypté en un premier jeton de paiement (201) d'un système de paiement à base de jetons et le deuxième jeton de paiement crypté (222) doit être décrypté en un deuxième jeton de paiement (202) du système de paiement à base de jetons ;
où des première et deuxième clés de décryptage sont utilisées dans les première et deuxième étapes de décryptage (14, 24), respectivement ; et
où la deuxième unité de fournisseur de services (2) fournit (13) la première clé de décryptage pour l'étape de décryptage (14) du premier jeton de paiement crypté (211).

11. Objet (100) selon la revendication 10, comprenant une mémoire de données électroniques stockant la structure de données de paiement commune (200) ou les informations d'accès (110) ; et comprenant facultativement une unité de décryptage pour décrypter des jetons de paiement cryptés en jetons de paiement.

12. Objet (100) selon la revendication 10 ou la revendication 11,
les informations d'accès (110) comprenant une adresse de la structure de données de paiement commune distante (200) de l'objet (100) et/ou des données d'accès secrètes pour la structure de données de paiement commune distante (200) de l'objet (100) ; et/ou
les informations d'accès (110) pour la structure de données de paiement commune (200) de l'objet (100) sont fournies sous une forme lisible optiquement sur l'objet.

13. Objet (100) selon l'une des revendications 10 à 12, dans lequel
une chaîne de services prédéfinie, comprenant au moins les premier et deuxième services, est à fournir à l'objet ; et/ou
les premier et deuxième services sont des services de production, des services de transport ou des services de destruction.

14. Unité de structure de données de paiement distante (8), l'unité distante comprenant
une structure de données de paiement (200) pour un objet physique pour lequel une chaîne de services prédéfinie, y compris des premier et deuxième services provenant de premier et deuxième fournisseurs de services, doit être fournie, la structure de données de paiement (200) comprenant un premier jeton de paiement crypté (211) et un deuxième jeton de paiement crypté (222), où des première et deuxième clés de décryptage sont nécessaires pour décrypter respectivement le premier/deuxième jeton de paiement crypté (211, 222) en un premier/deuxième jeton de paiement (201, 202) ; et
une unité de gestion de structure de données conçue pour fournir le premier/deuxième jeton de paiement (201, 202) ou le premier/deuxième jeton de paiement crypté (211, 222) à des premier/deuxième fournisseurs de services (1, 2) et/ou pour décrypter le premier/deuxième jeton de paiement crypté (211, 222), où la deuxième unité de fournisseur de services (2) fournit (13) la première clé de décryptage pour l'étape de décryptage (14) du premier jeton de paiement crypté (211).

15. Système de service configuré pour mettre en œuvre un procédé selon l'une des revendications 1 à 9, le système comprenant de préférence
au moins la première unité de fournisseur de services (1) et la deuxième unité de fournisseur de services (2) ;
au moins un ou plusieurs objets physiques (100) selon l'une des revendications 10 à 13 ; et/ou
une unité de structure de données de paiement distante (8) selon la revendication 14, stockant les structures de données de paiement (200) de l'au moins un ou plusieurs objets physiques (100).
